**Europäisches Patentamt**

**European Patent Office**

**Office européen des brevets**

(19)

(11) Numéro de publication: **0 003 375**

**B1**

(12) **FASCICULE DE BREVET EUROPEEN**

(45) Date de publication du fascicule de brevet: **30.12.81**

(51) Int. Cl.³: **F 16 K 27/00**

(21) Numéro de dépôt: **79200025.9**

(22) Date de dépôt: **15.01.79**

(54) **Robinet d'ordonnance et dispositif de sa mise en place.**

(30) Priorité: **20.01.78 FR 7802810**

(43) Date de publication de la demande:
**08.08.79 Bulletin 79/16**

(45) Mention de la délivrance du brevet:
**30.12.81 Bulletin 81/52**

(84) Etats Contractants Désignés:
**BE DE GB IT NL SE**

(56) Documents cités:
FR - A - 1 564 870
US - A - 1 523 588

FUEL EFFICIENCY BULL. n° 36, Jan. 1945, page 13, figure 7 "Two methods of taking branches from ringmain"

(73) Titulaire: **ROBIMATIC S.A.**
**14, rue des Alpes**
**F-74102 Annemasse (FR)**

(72) Inventeur: **Le Noan, André**
**Les Granges no 23**
**F-74000 Viuz en Sallaz (FR)**

(74) Mandataire: **Silhol, Christian Maurice Alfred**
**c/o BUGNION S.A. Conseils en Propriété**
**Industrielle 10, route de Florissant Case 42**
**CH-1211 Geneve 2 (CH)**

Courier Press, Leamington Spa, England.

Robinet d'ordonnance et dispositif de sa mise en place

L'invention concerne les appareils servant à interrompre ou à rétablir la circulation d'un fluide dans une canalisation, à l'aide d'un obturateur commandé de l'extérieur, plus particulièrement, un robinet d'ordonnance constitué par une tige de commande d'un obturateur se vissant à l'intérieur d'un cylindre fileté, dûment muni d'un presse étoupe et d'un filetage de fixation avec épaulement d'étanchéité.

Le développement des abreuvoirs automatiques, principalement dans les élevages bovins et porcins, simplifie considérablement la tâche de l'éleveur pour la satisfaction des besoins en eau de ses animaux.

Mais si l'adaptation des animaux est rapide, il n'est pas possible d'éviter la sévérité des conditions de service desdits abreuvoirs, et, par conséquent, la nécessité d'un changement fréquent des pièces qui les constituent.

Sauf installation particulièrement bien faite et coûteuse, la réparation d'un seul abreuvoir rend nécessaire l'arrêt de la distribution de l'eau dans toute l'étable ou la porcherie.

Si, par manque de pièces de rechange, la panne se prolonge, il faut accepter l'inondation d'une partie des stalles ou assurer une distribution manuelle de l'eau indispensable aux animaux.

Le brevet US—A 1.523.588 (A. W. GOETZ) décrit une vanne de branchement comportant une tige de commande d'une obturateur se vissant à l'intérieur d'un cylindre taraudé muni d'un presse-étoupe et d'un filetage de fixation.

La mise en place de cette vanne rend nécessaire le sectionnement de la canalisation principale, le filetage, à pas contraires, des extrémités sectionnées et par conséquent le démontage complet du tube qui la constitue.

Le but de l'invention consiste à fournir un moyen permettant d'éviter ces inconvénients en autorisant l'arrêt de la distribution d'eau au seul niveau de l'abreuvoir ou de l'accessoire en panne, sans pour autant coûter aussi cher que la mise en place d'une vanne d'arrêt par point de distribution.

A cette fin, le robinet d'ordonnance selon l'invention est caractérisé par le fait que la tige de commande comporte à l'une de ses extrémités un obturateur conique pouvant coopérer, d'une part, avec un siège, et, d'autre part, avec une partie, pourvue d'une chanfrein intérieur, de l'embouchure du cylindre, la base dudit cône portant un joint d'étanchéité et par le fait que le cylindre comporte, à l'opposé du presse-étoupe, une embouchure extérieurement conique dans le prolongement du filetage de fixation.

Les principaux avantages d'un tel robinet résident à la fois dans sa simplicité et dans son faible prix de revient qui permettent sa mise en place sur chaque appareil de distribution, à chaque point de dérivation, évitant ainsi la fermeture de l'ensemble de la canalisation.

L'invention comporte également un dispositif permettant la mise en place rapide dudit robinet d'ordonnance, caractérisé par le fait qu'il est constitué par deux brides en arc de cercle, symétriques, placées de part et d'autre d'une canalisation principale, l'une comportant, à l'extérieur de l'arc de cercle, un orifice taraudé au pas de fixation du robinet, l'autre comportant, à l'intérieur de l'arc de cercle, une amorce tubulaire de canalisation dont l'embase est légèrement conique, chacune des brides étant plaquée contre ladite canalisation, avec des joints d'étanchéité, par des moyens de serrage appropriés. Un tel dispositif est peu coûteux, rapidement mis en place et adaptable sur chaque point de répartition d'une canalisation principale.

Il apporte en outre un avantage important: la solidité, car, dans le cas d'abreuvoirs automatiques par exemple, si un robinet d'arrêt est placé entre la canalisation principale et l'abreuvoir, l'allongement du support de l'abreuvoir est un risque évident de cassure. Avec le dispositif selon l'invention, le robinet d'ordonnance et l'abreuvoir sont placés de part et d'autre de la canalisation principale et le robinet est ainsi protégé par celle-ci contre les coups donnés par les animaux.

D'autres avantages ressortiront de la description qui va suivre d'une forme de réalisation donnée à titre d'exemple — préférentielle mais non limitative — et du dessin dans lequel:

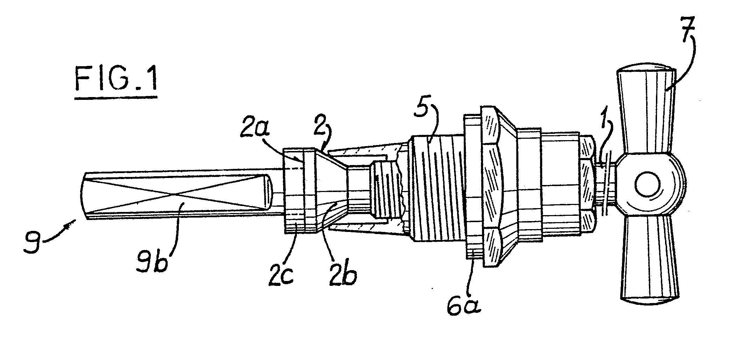

La figure 1 est une vue en coupe partielle du robinet d'ordonnance.

La figure 2 est une vue en coupe partielle du dispositif de fixation.

Les figures représentent le robinet d'ordonnance constitué par une tige de commande (1) d'un obturateur (2) se vissant à l'intérieur d'un cylindre taraudé (3), dûment muni d'un presse étoupe (4) et d'une filetage de fixation (5) avec épaulement d'étanchéité (6) pourvu d'un joint (6a). La tige de commande (1) comporte, à l'opposé de la poignée (7), un obturateur (2) conique: la base (2a) du cône porte un joint (2c) d'étanchéité, le sommet (2b) est situé dans le prolongement de l'axe XX de la tige (1).

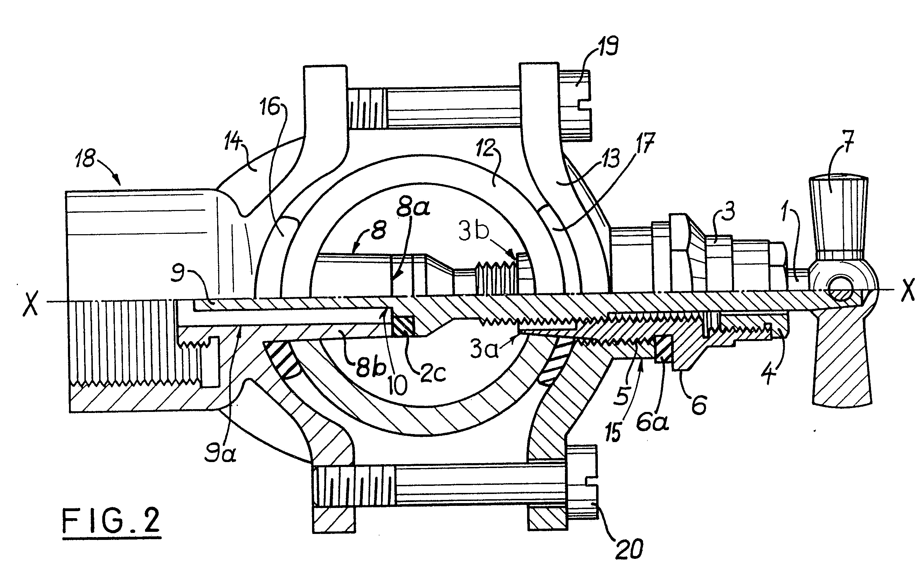

Cet obturateur conique (2) comporte des moyens de guidage, à l'intérieur d'une amorce tubulaire (8) (fig. 2) de dérivation, constitués par un tige (9) à méplats (9a, 9b) située dans l'axe X—X.

L'embase (10) de la tige (9), concentrique à l'axe X—X, n'occupe que partiellement la base (2a) du cône de façon que celle-ci constitue un épaulement circulaire pour le joint d'étanchéité (2c).

Le cylindre (3) comporte une partie conique (3a) non filetée, à l'opposé de l'épaulement (6).

L'embouchure (3b) de cette partie (3a) du cylindre (3) est chanfreinée extérieurement et intérieurement de façon que le sommet (2b) du cône de l'obturateur s'applique efficacement contre ledit chanfrein intérieur lorsque le robinet est dévissé à fond.

Ces surfaces ainsi en contact sont rôdées pour assurer l'efficacité dudit contact lorsque le robinet est ouvert à fond, soulageant ainsi le presse-étoupe de la pression d'eau régnant à l'intérieur de la canalisation.

La figure 2 donne une vue d'ensemble du dispositif de fixation de ce robinet d'ordonnance sur une canalisation principale (12).

Ce dispositif est constitué par deux brides (13, 14) en arc de cercle, symétriques, placées de part et d'autre de la canalisation (12).

L'une de ces brides (13) comporte à l'extérieur de l'arc de cercle un orifice taraudé (15) au pas de fixation (5) du cylindre (3).

L'autre bride (14) comporte, à l'intérieur de l'arc de cercle, une amorce tubulaire (8) de canalisation de dérivation, dont l'embouchure (8a) reçoit l'obturateur (2) et dont l'embase (8b) est légèrement conique.

Chacune des brides (13, 14) est plaquée contre la canalisation (12) avec un joint d'étanchéité (16, 17).

L'amorce de canalisation (8) débouche dans un raccord femelle (18), sur lequel peut être raccordé un abreuvoir automatique ou tout autre appareil branché en dérivation sur la canalisation (12).

On procède à la mise en place de ce dispositif de la façon suivante.

Après avoir vidé la canalisation (12), on la perce à l'emplacement choisi en s'efforçant de réaliser ce perçage en place selon le plus grand diamètre, dans la direction convenant au branchement de l'appareil considéré; lorsqu'il s'agit d'abreuvoirs automatiques la canalisation (12) leur sert de support et doit être placée à bonne hauteur, l'axe du perçage sera donc sensiblement parallèle au sol de l'écurie.

Chaque bride (13, 14) portant le robinet d'ordonnance et l'amorce (8), préalablement munie de son joint (16, 17) sera enfilée dans le trou correspondant: par l'embout conique (3a) pour la bride (13), par l'amorce (8) avec embase conique (8b) pour la bride (14).

Deux vis (19, 20) seront ensuite légèrement serrées et le guide (9), lors de la fermeture du robinet, fera plaquer l'obturateur (2) muni de son joint (2c) contre l'embouchure (8a) de l'amorce (8).

La conicité de l'embase (8b) et celle du cylindre (3a) corrigeront le manque probable d'alignement des deux trous percés dans la canalisation (12) et le serrage des vis (19, 20) fera plaquer les joints (16, 17) assurant l'étanchéité de la prise rapide ainsi effectuée.

Dans une autre forme de réalisation — non représentée — la tige (9) est remplacée par un cône, plus haut que l'obturateur (2), mais de base égale et plaquée sur la base (2a) de l'obturateur (2) dont le joint (2c) a été supprimé et remplacé par un joint torique placé dans une gorge concentrique à la base commune.

Le bicône ainsi formé sert, dans un sens, de guide puis de fermeture de l'amorce (8), dans l'autre sens—robinet complètement ouvert, de fermeture au niveau de l'embouchure (3a).

**Revendications**

1. Robinet d'ordonnance constitué par une tige de commande (1), d'un obturateur (2) se vissant à l'intérieur d'un cylindre taraudé (3) dûment muni d'un presse-étoupe (4) et d'une filetage de fixation (5) avec épaulement d'étanchéité (6), caractérisé par le fait que la tige de commande (1) comporte, à l'une de ses extrémités, un obturateur (2) conique pouvant coopérer d'une part avec un siège (8a), et, d'autre part, avec une partie pourvue d'une chanfrein intérieur de l'embouchure (3a) du cylindre (3), la base (2a) du cône (2) portant un joint d'étanchéité (2c), et par le fait que le cylindre (3) comporte, à l'opposé du presse-étoupe (4) une embouchure (3b) extérieurement conique, dans le prolongement du filetage de fixation (5).

2. Dispositif pour la mise en place du robinet d'ordonnance selon la revendication 1, caractérisé par le fait qu'il est constitué par deux brides en arc de cercle (13, 14), symétriques, placées de part et d'autre d'une canalisation principale (12), l'une (13) comportant à l'extérieur de l'arc de cercle, un orifice (15) taraudé au pas de fixation (5) du cylindre (3), l'autre comportant, à l'intérieur de l'arc de cercle, une amorce tubulaire (8) de canalisation de dérivation dont l'embouchure formant ledit siège (8a) reçoit l'obturateur (2) et dont l'embase (8b) est légèrement conique, chacune des brides étant plaquée contre la canalisation (12) avec des joints d'étanchéité (16, 17), par des moyens de serrage appropriés.

3. Robinet d'ordonnance selon l'ensemble des revendications précédentes, caractérisé par le fait que la tige de commande (1) comporte des moyens de guidage à l'intérieur de l'amorce tubulaire (8).

4. Robinet d'ordonnance selon la revendication 3, caractérisé par le fait que lesdits moyens de guidage sont constitués par une tige (9) à méplats (9a) prolongeant la tige de commande (1) à partir de la base (2a) du cône (2b) de l'obturateur (2).

5. Robinet d'ordonnance selon la revendication 4, caractérisé par le fait que le joint d'étanchéité (2c) associé à l'obturateur (2) est placé sur la base (2a) du cône (2b) de l'obturateur (2) autour de l'embase (10) de la tige (9) à méplats (9a).

6. Robinet d'ordonnance selon la revendication 3, caractérisé par le fait que les moyens de guidage sont constitués par un cône dont la base est commune à celle (2a) de l'obturateur (2).

7. Robinet d'ordonnance selon la revendication 6, caractérisé par le fait qu'une gorge est creusée pour un joint d'étanchéité autour de la base commune (2a).


### Claims

1. A distribution tap made of an operating stem (1), a closing device (2) which is screwed into a taped cylinder (3) duly provided with a stuffing gland (4) and a fixing threaded part (5) with an imperviousness shouldering (6), characterized by the fact that the operating stem is provided with, at one of its ends, a conical closing device (2) which can work with a seat (8a) on the one hand and, on the other hand, with a part provided with a bevelled edge inside the mouth (3a) of the cylinder (3), the base (2a) of the cone (2) having an imperviousness joint (2c), and by the fact that the cylinder (3) is provided opposite to the stuffing gland (4) with an externally conical mouth (3b), in the prolongation of the fixing threaded part (5).

2. A device for the setting of the distribution tap according to claim 1, characterized by the fact that it is made of two arc-shaped flanges (13, 14) symmetrical and set on both sides of a main pipe (12), one of them (13) provided on the outside of the arc, with a diversion pipe tubular beginning (8), the mouth of which forming the aforesaid seat (8a), receives the closing device (2), and the base (8b) of which is slightly conical, each of the flanges being kept close to the pipe (12) with imperviousness joints (16, 17) by proper tightening means.

3. A distribution tap according to all the preceding claims, characterized by the fact that the operating stem (1) is provided with guiding means inside the tubular beginning (8).

4. A distribution tap according to claim 3, characterized by the fact that the aforesaid guiding means are made of a stem (9) with flat parts (9a) which prolongs the operating stem from the base (2a) of the cone (2b) of the closing device (2).

5. A distribution tap according to claim 4, characterized by the fact that the imperviousness joint (2c), associated to the closing device, is set on the base (2a) of the cone (2b) of the closing device (2) around the base (10) of the stem (9) with flat parts (9a).

6. A distribution tap according to claim 3, characterized by the fact that the guiding means are made of a cone the base of which is common to that (2a) of the closing device (2).

7. A distribution tap according to claim 6, characterized by the fact that a groove is hollowed for an imperviousness joint around the common base (2a).


### Patentansprüche

1. Abzweighahn mit einer Betätigungsspindel (1) für ein Verschlusstück (2), welche in eine zylindrische Gewindehülse (3) mit einer Stopfbuchse (4), einem Aussengewinde (5) und einer Dichtschulter (6) eingeschraubt ist, dadurch gekennzeichnet, dass die Betätigungsspindel (1) an einem ihrer Enden ein konisches Verschlusstück (2) trägt, welches einerseits mit einem Ventilsitz (8a) und andererseits mit einer inneren Abschrägung an de Mündung (3a) der Gewindehülse (3) zusammenwirkt und dessen Konusbasis (2a) mit einer Dichtung (2c) versehen ist, und dass die Gewindehülse (3) gegenüber der Stopfbuchse (4) und in Verlängerung des Aussengewindes (5) eine aussen konisch ausgebildete Mündung (3b) aufweist.

2. Vorrichtung zur Anbringung des Abzweighahnes nach Anspruch 1, gekennzeichnet durch zwei kreisbogenförmige, symmetrische Rohrschellen (13, 14) beiderseits einer Hauptleitung (12), von denen die eine (13) auf der Aussenseite des Kreisbogens eine Gewindebohrung (15) für das Aussengewinde (5) der Hülse (3) aufweist und die andere (14) auf der Innenseite des Kreisbogens einen Rohrstutzen (8) der Abzweigleitung trägt, dessen Mündung den Ventilsitz (8a) für das Verschlusstück (2) bildet und dessen Aussenumfang (8b) leicht konisch ausgebildet ist, wobei jede der beiden Rohrschellen an det Leitung (12) unter Zwischenlage von Dichtungen (16, 17) mittels geeigneter Klemmeinrichtungen gehalten wird.

3. Abzweighahn nach den beiden vorhergehenden Ansprüchen, dadurch gekennzeichnet, dass die Betätigungsspindel (1) mit Einrichtungen zur Führung innerhalb des Rohrstutzens (8) versehen ist.

4. Abzweighahn nach Anspruch 3, dadurch gekennzeichnet, dass die Führungseinrichtungen aus einer Abflachung (9a) an einer Verlängerung (9) der Betätigungsspindel (1) an der Basis (2a) des Konusabschnittes (2b) am Verschlusstück (2) bestehen.

5. Abzweighahn nach Anspruch 4, dadurch gekennzeichnet, dass die Dichtung (2c) des Verschlusstückes (2) an der Basis (2a) des Konusabschnittes (2b) am Verschlusstück (2) um den Aussenumfang (10) der Verlängerung (9) mit der Abflachung (9a) angeordnet ist.

6. Abzweighahn nach Anspruch 3, dadurch gekennzeichnet, dass die Führungseinrichtungen aus einem Konus bestehen, dessen Basis gemeinsam mit derjenigen (2a) des Verschlusstückes (2) ist.

7. Abzweighahn nach Anspruch 6, dadurch gekennzeichnet, dass eine Ringnut für eine Dichtung um die gemeinsame Basis (2a) eingearbeitet ist.

FIG.1

FIG.2

0 0003 375